# EUROPEAN PATENT APPLICATION

(11) **EP 2 738 293 A1**
(43) Date of publication of application: **04.06.2014**
(21) Application number: 13195021.4
(22) Date of filing: 29.11.2013
(51) Int. Cl.: D03D 1/00, B32B 25/10, D03D 15/00, D03D 15/12

(54) **Multilayer woven fabric with electrical protection characteristics**

(30) Priority: 29.11.2012 US 201261731151 P; 27.11.2013 US 201314092466
(71) Applicant: Barrday, Inc., Cambridge, Ontario N1T 1S2 (CA); Elder, Jason Douglas, Cambridge Ontario N1T 1S2 (CA)
(72) Inventor: Elder, Jason Douglas, Cambridge, Ontario N1T 1S2 (CA)
(74) Representative: Cordina, Kevin John

(57) **Abstract**

A multilayer woven textile with improved performance characteristics is disclosed. The multilayer woven textile may include a spun yarn having conductive staple fibers and nonconductive staple fibers. The spun yarn may be woven in a multilayer weave pattern.

## Description

### FIELD

The embodiments herein relate to woven fabrics, and in particular to multilayer woven fabrics that impart electrical protection, which may be useful for personal protection or for protection of equipment.

### INTRODUCTION

A faraday cage is an enclosure of conductive material for protecting the interior of the cage from external electric fields. In some cases, a faraday cage may be worn as clothing and formed from a mesh of conductive material (e.g., chain mail). A faraday cage may be used to provide electromagnetic interference (EMI) shielding, radiation protection, and static discharge protection, for example, for both personal use and also for providing protection to machinery and other equipment.

A wearable faraday cage may provide protection from electroshock weapons, for example Tasers, stun guns and cattle prods. Law enforcement departments are increasingly issuing non-lethal electroshock weapons (particularly Tasers) to their officers for subduing individuals when needed. However, many law enforcement officers suffer wounds that are inflicted by their own weapons. Therefore, it may be desirable for law enforcement officers to wear protective equipment that provides at least some electroshock protection, such as a wearable faraday cage.

In some cases, clothing (e.g., pants, shirts, overalls) may be made of conductive textiles to form a faraday cage for providing protection against electroshock weapons, electromagnetic fields and other electrical effect. One such known textile consists of wire wrapped with a conventional textile yarn, for example as described in U.S. Patent Application Publication No. 2011/0258762 to Schultz. However, this type of textile tends to be heavy, difficult to weave, difficult to cut, and not breathable.

### SUMMARY OF SOME EMBODIMENTS

In accordance with at least one embodiment, there is a textile including a spun yarn that includes at least one conductive staple fiber and at least one non-conductive staple fiber. The spun yarn is woven in woven pattern, such as a multilayer weave pattern, for example using a three-dimensional weaving machine or other multi-layer weaving techniques, or a plain weave pattern.

### DRAWINGS

Some embodiments will now be described, by way of example only, with reference to the following drawings, in which:
FIG. 1 shows a textile for providing electrical protection in accordance with at least one embodiment; and

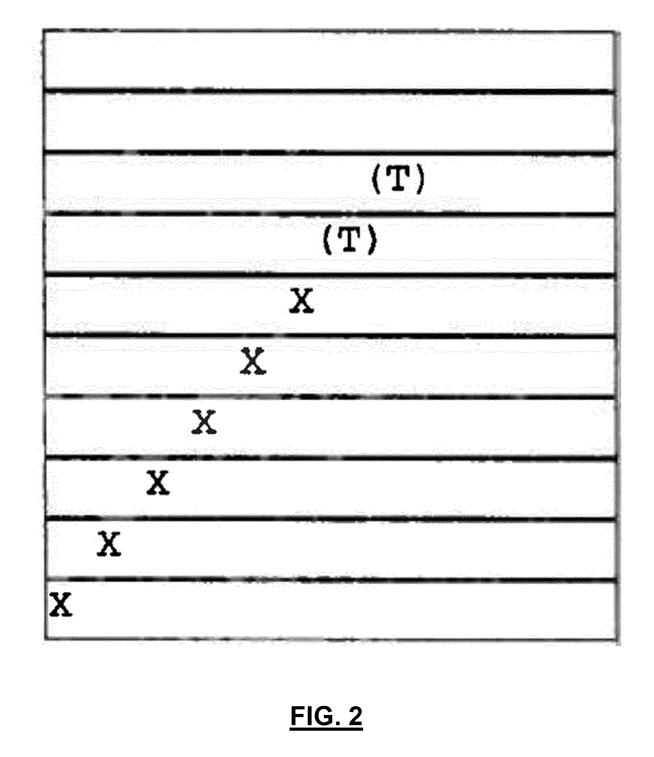

FIG. 2 shows a draw plan for forming a protective fabric in accordance with at least one embodiment.

### DESCRIPTION OF VARIOUS EMBODIMENTS

As used herein, the term "fiber" refers to an elongated body for which the length dimension is greater than the transverse or width dimension. In some embodiments, a series of fibers aligned in the same general longitudinal direction may constitute a yarn or tape.

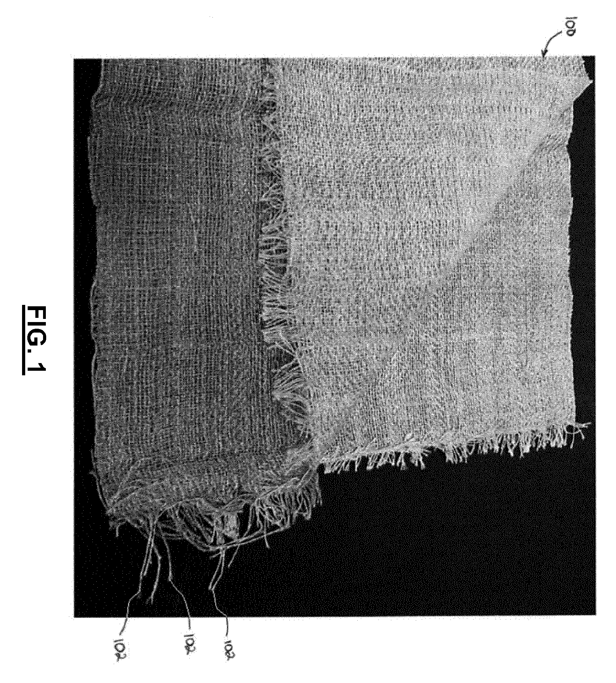

Referring to FIG. 1, a textile 100 in accordance with at least one embodiment is shown. In the example shown, textile 100 is made from strands 102 of hybridized spun yarn woven in a multilayer woven structure. In other embodiments, the hybridized spun yarn may be woven in other weaving patterns, such as a plain weave for example.

Generally, a strand 102 of hybridized spun yarn may include a plurality of types of staple fibers. Moreover, the types of staple fibers may be selected to provide textile 100 with particular performance characteristics.

According to at least one embodiment, each strand 102 may include one or more of conductive staple fibers (e.g. metal fibers of stainless steel, aluminium or copper), non-conductive staple fibers (e.g. polyester or cotton), PBI™ brand fibers from PBI Performance Products Inc.™, Nomex™ brand fibers from DuPont™, aramid fibers (e.g. Kevlar™ from DuPont™), nylon fibers and Lenzing FR™ Color fibers. In the example shown, each strand 102 includes at least conductive staple fibers and non-conductive staple fibers. In some embodiments, at least some of the fibers may provide at least some protection against threats, such as ballistic, stab threats, or spike threats, or some combination thereof.

Conductive staple fibers may permit the textile 100 to form a faraday cage for providing protection against electromagnetic fields, electroshock weaponry and the like. In at least one embodiment, the textile 100 (including the conductive staple fibers) will have a conductivity that is higher than the conductivity of the human body (or another mammal). This higher conductivity may permit the textile 100 to short the positive and negative terminals of an electroshock weapon (e.g., a Taser), to disrupt both static and non-static electrical fields, and so on.

In some exemplary embodiments, non-conductive staple fibers, such as cotton and polyester for example, may improve the breathability and softness of the textile 100.

In some exemplary embodiments, PBI™ brand fibers from PBI Performance Products Inc.™, and Nomex™ brand fibers from DuPont™ may improve the thermal and flame protection characteristics of textile 100.

In some exemplary embodiments, aramid fibers and nylon fibers may improve the abrasion resistance of textile 100. Such fibers may also provide some measure of ballistic protection

In some exemplary embodiments, Lenzing FR™ Color fibers may improve the colorfastness and thermal protection characteristics of the textile 100.

In the example shown, the textile 100 has a multilayer woven structure. The multilayer woven structure may improve the hand (e.g., softness) and drape of textile 100 over standard woven products. Generally, multilayer woven fabrics (e.g., mock-knits) may provide hand, comfort and breathability on par with knit fabrics. However, multilayer fabrics may be easier to process and convert (e.g., to laminate, coat, cut and sew) as compared with knit fabrics because multilayer fabrics tend to exhibit less deformation when placed under tension.

These characteristics may make it easier to make clothing, blankets or other protective coverings (e.g., for computers or other equipment) out of the textile 100 (or other similar textiles). These characteristics may also make the textile 100 (or other similar textiles) more comfortable when worn as clothing.

Multilayer weave patterns may also be easily hybridized. More particularly, in at least one embodiment, the textile 100 may include multiple types of yarn. For example, in some embodiments each type of yarn may be woven in a different orientation and may include a different mix of staple fibers, including for instance conductive and non-conductive fibers.

In one example, textile 100 may include a first yarn having conductive staple fibers (e.g., stainless steel fibers) and non-conductive staple fibers (e.g. polyester) on one side of the textile 100, a second yarn having Nomex™ fibers and aramid fibers on the other side of the textile 100, and a structural lattice made of aramid filaments. The first yarn may improve the capacity of the textile 100 to protect against electromagnetic fields and electroshock weaponry, the second yarn may improve the capacity of the textile 100 to protect against heat and flames, and the aramid structural lattice may improve the tear and stress resistance of the textile 100, or provide some ballistic protection (or both).

In at least one embodiment, the multilayer weave pattern of the textile 100 may permit the textile 100 to be easily laminated in composite with a membrane. As discussed above, the textile 100 may exhibit little deformation when subjected to tension as compared to conventional knit fabrics. This may improve the stability of composite textiles that incorporate the textile 100.

In some embodiments, the textile 100 may be laminated in composite with one or more other layers, such as a metallized polyethylene (PE) and/or metalized polypropylene (PP) membrane, a polyetrafluoroethylene (ePTFE) membrane (e.g. GoreTex®), or a PE film. This process may improve the abrasion or impact resistance (or both) of the textile 100.

In the example shown, the textile 100 includes a three-dimensional (3D) twill. The 3D twill includes an upper 2/1 twill (i.e. 2 raised harnesses per lowered harness) with a warp face up (WFU), a lower 2/1 twill with a reversed warp face down (WFD), and a structural lattice.

The following Table 1 lists the properties and composition of one example textile in accordance with at least one embodiment:

**Table 1: Properties of Exemplary Textile**

| PROPERTY | VALUE |
|---|---|
| linear mass density | 394 decitex |
| staple fiber blend (wt%) | 80% polyester, 20% stainless steel |
| ends | 51/in |
| picks | 45/in |
| Weave | 2-1 Twill WFU / 2-1 Rev Twill WFD multilayer |
| greige weight | 153.6 g/m² |
| greige width | 50.8 cm |
| warp ends | 1040 |
| Reed | 6.69 dents/cm |
| ends/dent | 3 |
| reed width | 51.8cm |
| Harnesses | 8 |
| draw in plan | See FIG. 2 |
| lifting plan | See FIG. 3 |
| bottom warp length | 1.02 m |
| centre leno | 0 |
| leno harnesses | 0 |
| Picks | 1772/m |
| yarn per linear m of greige fabric | 0.042 kg/linear m of warp |
| | 0.045 kg/linear m of weft |
| weight | 154 gsm |

In some embodiments, the textile 100 may be applied to or used to fabricate articles such as, for example, shirts, pants, overalls, vests, hats, blankets, equipment coverings (e.g. for electronic or other EMF sensitive equipment), socks, shoes, gloves, or masks.

In some cases, the articles including the textile 100 may be suitable for use by law enforcement, firefighters, for military application, and the like. For example, the textile 100 may be incorporated into ballistic, stab, or multi-threat protective clothing (e.g. body armor, particularly soft armor). Such clothing may be worn by law enforcement officers or military personnel, for example.

In some embodiments, the textile 100 may be applied in composite to such protective clothing as an additional layer of fabric. The textile 100 may supplement the protection provided by the protective clothing with additional electroshock, EMF, heat, flame or other protection. In some embodiments, the textile 100 may provide substantially all of the protection of the protective clothing against one or more of electroshock, EMF, heat, and flame.

In some embodiments the textile 100 may provide protection against multiple threats, for example protection against electromagnetic fields, electroshock weaponry and the like as well as protection against at least one other threat (i.e., spike, stab, or ballistic threats).

In some embodiments, one or more fibers used in the textile may include high-performance fibers such as aramid fibers, extended chain polyethylene fibers, and/or poly(p-phenylene-2,6-benzobisoxazole) (PBO) fibers. Other examples could include aramid and copolymer aramid fibers, for example as produced commercially by DuPont (Kevlar®), Teijin (Twaron®), Kolon (Heracron®), and Hyosung Aramid, modified para-aramids (e.g. Rusar®, Autex®), ultra high molecular weight polyethylene (UHMWPE) produced commercially by Honeywell, DSM, and Mitsui under the trade names Spectra®, Dyneema®, and Tekmilon®, respectively (as well as Pegasus® yarn), polyethylene fibers and films produced by Synthetic Industries and sold under the trade name Tensylon®, poly(p-phenylene-2,6-benzobisoxa-zole) (PBO) (produced by Toyobo under the commercial name Zylon®), and/or polyester-polyarylate yarns (e.g. Liquid crystal polymers produced by Kuraray under the trade name Vectran®). In some embodiments, the fibers are Innegra™ fibers produced by Innegrity™ LLC.

In some embodiments, a fabric pattern is selected that allows for various combinations of additional yarn insertions (e.g. of yarns with different structural and/or conductive properties) over and above a particular weave pattern (e.g. a basic weave pattern) to provide for additional mechanical properties or conductive properties (or both). For example, in some embodiments one or more aramid cross-link yarns may be inserted into a fabric at a particular frequency or pattern within a woven fabric as structural fibers that provide tear resistance, shear resistance between the fabric layers, and abrasion resistance, or some combination thereof.

Generally, within various different fabric patterns for each layer, two types of cross-link fibers may be provided so as to join the two (or more) layers of fabric together and form a multi-layer fabric. For example, in some embodiments, a 3-1 Rev Twill / Plain Weave multi-layer fabric may be secured together using at least some conductive fibers (and which may be smaller in size) as cross link fibers that are adapted to secure the layers together without tending to increase the strength or other mechanical properties of the fabric. The fabric may also include structural cross-link fibers (e.g. made of an aramid or other material and which may be larger) that are selected to improve the mechanical properties of the fabric.

In some embodiments, at least some of the cross-links fibers may be blended. In particular, blending cross-link fibers using more efficient or patterned derived crosslinks tends to enable the patterns within both planes of a multilayer fabric weave to be blended together (unlike a traditional multilayer) thus creating a more uniform surface continuity. In contrast, a standard multi-layer fabric may have gaps where either the cross-links are exposed or the alternating patterns of the individual layers are separated during weaving

In some embodiments, cross-link fibers can be woven into a third Z-axes (e.g. by 3D weaving techniques) by using insertion cramming techniques to force an insertion yarn to draw into the Z-axis due to the torque force exerted on the fabric while the fabric is being woven. Typical weaving involves weaving while a forward motion continually rolls up the fabric resulting in even tension. However, as in this case, if the forward motion of a loom is stopped while weaving continues (e.g. "insertion cramming") the residual potential torque load within the fabric at beat up tends to force the inserted yarn into the third axis (Z-axis) when forward motion resumes. Cramming can generally be defined as a forward motion pause, but where weaving/yarn insertion continues.

Such cramming techniques can also be used to secure alternative yarns within a multi-layer fabric to support the addition of other mechanical properties.

In some cases, these techniques may provide an improvement over traditional weaves due to the distribution of fibers on two or more planes. In particular, this may provide an alternative for knit products for improved coating and lamination (also called a "mock-knit"). Knitted products tend to stretch and move resulting in at least two issues, namely residual internal stresses, and distortion and uneven or ineffective coatings and lamination. In some embodiments, the layers of fabric are cross-linked together to provide the fabric with at least one physical properties of a knit fabric (e.g. hand, etc.) without some of the other drawbacks of a knitted product.

Furthermore, the tie in yarns when woven in a specified pattern, whether crammed or not, may provide shear resistance without preventing the multilayer from bending as two separate individual woven fabrics would (not unlike a loose stitch).

Woven fabrics, as compared to knits, are structurally stable (e.g. they tend not to stretch). Accordingly, a multi-layer weave that does not stretch in multiple dimensions may be easier to coat, laminate, and/or process through a converting operation (unlike a knit fabric). Also, when knit fabrics are coated, laminated, or converted into a fixed state, there usually exist residual tensions (typically in shear against whatever the knit substrate is laminated, coated, or stitched to).

These residual tensions may reduce the reliability or rigidity (or both) of the end product that uses a knit, particular since because these tensions tend to want to fight to "un-stretch". However, this is usually not an issue with woven fabrics. Accordingly, some of the multi-layer fabrics as described herein may maintain the "hand" (e.g. ductility/flexibility) and thickness of a knit but without impose some of the same process and durability issues.

A 3-1 Rev Twill layer generally provides a flat surface that is suitable for lamination, coating and garment manufacturing (or other purposes), while the plain weave layer generally provides structure and additional yarn layering for improved conductive performance. In this manner, a multi-layer fabric can generally be woven that has a desired level of conductive properties as well as desired mechanical properties.

Various weaving styles may be applied to a multi-layer platform (e.g. twill, satin, plain woven, etc.) depending on the desired properties of the finished fabric. For example, a multi-layer fabric could include a fancy weave pattern layer on one side of the fabric coupled to a satin layer on the other side of the fabric.

In some embodiments, the teachings herein may provide for hybridized fabrics comprising conductive and non-conductive fibers for use in multi-threat ballistic protection packages or stand along ballistic protection packages (or both) for applications such as military, or law enforcement.

While particular embodiments have been illustrated and described, it will be apparent to those skilled in the art that various other changes and modifications may be made without departing from the scope of the present application.

## Claims

1. A textile comprising:
a plurality of spun yarns, each spun yarn having conductive staple fibers and non-conductive staple fibers, the spun yarns woven in a multilayer weave pattern; and
wherein the spun yarns provide the textile with a conductivity that is higher than the conductivity of a mammalian body, and
wherein the non-conductive staple fibers include at least one of stainless steel fibers and copper fibers.

2. The textile of claim 1, wherein the non-conductive staple fibers are selected to improve the breathability of the textile.

3. The textile of claim 1 or claim 2, wherein the non-conductive staple fibers are selected to improve the softness of the textile.

4. The textile of any one of claims 1 to 3, wherein the non-conductive staple fibers include at least one of cotton and polyester.

5. The textile of any one of claims 1 to 4, further comprising at least one additional fiber selected to improve the thermal and flame protection characteristics of the textile.

6. The textile of any one of claims 1 to 5, further comprising at least one additional fiber selected to improve the thermal and flame protection characteristics of the textile.

7. The textile of claim 6, wherein the at least one fiber includes at least one of PBI fibers and Nomex.

8. The textile of any one of claims 1 to 7, further comprising at least one additional fiber selected to improve the abrasion resistance of the textile.

9. The textile of claim 8, wherein the at least one additional fiber includes at least one of aramid fibers and nylon fibers.

10. The textile of any one of claims 1 to 9, further comprising at least one additional fiber selected to improve the colorfastness of the textile.

11. The textile of claim 10, wherein the at least one additional fiber includes Lenzing FR Color fibers.

12. The textile of any one of claims 1 to 11, wherein the textile is laminated in composite with one or more of:
a) a metallized polyethylene (PE) membrane;
b) a metalized polypropylene (PP) membrane,
c) a polyetrafluoroethylene (ePTFE) membrane; and
d) a PE film.

13. A protective article formed using a textile according to any one of claims 1 to 12, and optionally wherein the article is selected from at least one of shirts, pants, overalls, vests, hats, blankets, equipment coverings, socks, shoes, gloves, or masks, and optionally wherein the textile is applied in composite, the textile supplementing the protection provided by the protective clothing.

14. An article of clothing made from a textile according to any one of claims 1 to 12.

15. The article of clothing of claim 14, wherein the clothing provides at least one of ballistic, stab, or multi-threat protection.
